# EUROPÄISCHE PATENTSCHRIFT

(11) **EP 1 323 951 B1**
(45) Veröffentlichungstag und Bekanntmachung des Hinweises auf die Patenterteilung: **12.07.2006**
(21) Anmeldenummer: 02025263.1
(22) Anmeldetag: 13.11.2002
(51) Int. Cl.: F16H 19/00, E05B 53/00

(54) **Getriebe für Fenster- oder Türbeschläge**
Gear for window or door fittings
Engrenage pour ferrure de fenêtres ou de portes

(30) Priorität: 24.12.2001 DE 10164095
(43) Veröffentlichungstag der Anmeldung: 02.07.2003
(73) Patentinhaber: Aug. Winkhaus GmbH & Co. KG, D-48291 Telgte (DE)
(72) Erfinder: Hakenes, Andreas, 48165 Münster (DE); Wulfert, André, 48317 Drensteinfurt (DE); Renz, Dieter, 49479 Ibbenbüren (DE)

(56) Entgegenhaltungen:
- EP-A- 0 505 678
- EP-A- 0 677 631
- DE-A1- 4 131 762
- DE-B- 1 054 347
- DE-U- 7 424 932
- DE-U1- 20 002 397
- DE-U1- 20 012 634
- DE-U1- 29 917 345

## Beschreibung

Die Erfindung betrifft ein Getriebe für Fenster und/oder Türen zur Übertragung einer Drehbewegung von einem um eine erste Drehachse drehbaren ersten Übertragungsmittel auf ein um eine zweite Drehachse drehbaren zweiten Übertragungsmittel, wobei die erste Drehachse gegenüber der zweiten Drehachse parallel versetzt ist, und wobei die ersten und zweiten Übertragungsmittel miteinander über ein Verbindungselement gleichsinnig drehbar antriebsverbunden sind.

Bei zweiflügeligen Fenstern oder Türen ohne Mittelpfosten wird häufig eine als Hohlprofil ausgeführte Stulpleiste verwandt, die gebäudeinnenseitig an einem der Flügel angeordnet ist und den jeweils anderen Flügel bereichsweise übergreift. Im Rahmen der Anordnung einer Griffolive im Bereich der Stulpleiste besteht dabei aus optischen Gründen häufig die Anforderung, die Griffolive quermittig auf der Stulpleiste zu plazieren. Da der im Innern des Flügels angeordnete Treibstangenantrieb häufig aus konventionellen Bauteilen bestehen soll, die nicht besonders auf die geometrischen Bedingungen dieser Fensterbauart abgestimmt sind, ergibt sich durch die quermittige Plazierung der Griffolive auf der Stulpleiste ein mehr oder weniger großer Achsversatz zwischen der Drehachse einer Mehrkantaufnahme einer Getriebeschiene des Treibstangenantriebs und der Drehachse eines Mehrkantdorns der Griffolive. Zum Ausgleich eines solchen Achsversatzes sind bereits Getriebe bekannt.

Aus der DE 200 12 634 U1, die als nächstliegender Stand der Technik angesehen wird, ist ein solches Getriebe zur Übertragung einer Drehbewegung von einem um eine erste Drehachse drehbaren ersten Mitnehmer zur Kopplung mit einem Bedienelement in Form einer Griffolive auf ein um eine zweite Drehachse drehbaren zweiten Mitnehmer zur Kopplung mit einem Treibstangenantrieb bekannt. Dieses Getriebe besteht aus zwei auf den Drehachsen angeordneten Mitnehmern sowie einem diese umgebende, in einem Gehäuse drehgelagerten kreisförmigen Ringelement als Koppelelement zwischen den Mitnehmern. Die Mitnehmer weisen jeweils zwei radiale Vorsprünge auf, die in Ausnehmungen des Ringelements eingreifen und dadurch die Drehbewegungskopplung erreichen.

Aus der EP 0 505 678 A1 ist ein Getriebe zur Übertragung einer Drehbewegung von einem um eine erste Drehachse drehbaren ersten Zahnrad auf ein um eine zweite Drehachse drehbaren zweiten Zahnrad bekannt. Dabei ist die erste Drehachse gegenüber der zweiten Drehachse parallel versetzt, und das erste und das zweite Zahnrad sind miteinander über zwei Kopplungsritzel antriebsverbunden. Damit kann durch Drehung der Griffolive der Treibstangenantrieb betätigt werden, wobei die Übertragung der erforderlichen Drehmomente von der ersten Drehachse auf die parallel versetzte zweite Drehachse über das Getriebe erfolgt. Dabei bewirken die zwei zwischen den Zahnrädern geschalteten Kopplungsritzel eine derartige Bewegungskopplung, dass sich beide Zahnräder im gleichen Drehsinn drehen.

Aus der EP 0 677 631 B1 und der DE 74 24 932 U1 sind Getriebe zur Übertragung einer Drehbewegung von einem um eine erste Drehachse drehbaren ersten Übertragungsmittel zur Kopplung mit einem Bedienelement in Form einer Griffolive auf ein um eine zweite Drehachse drehbaren zweiten Übertragungsmittel zur Kopplung mit einem Treibstangenantrieb bekannt. Dabei sind die Übertragungsmittel mit Vierkantausnehmungen versehen, in die jeweils ein Vierkantstift eingreift und ähnlich einem Kardan-Antrieb eine Drehbewegungsübertragung zwischen den versetzten Drehachsen ermöglicht.

Aus der DE 299 17 345 U1 ist ein Getriebe bekannt, bei dem der Achsversatz über eine Kette überbrückt wird, die durch auf den Drehachsen angeordneten Zahnrädern geführt ist. Dabei sind zur Überbrückung von besonders geringen Achsabständen die Zahnbereiche der Zahnräder in Richtung der Drehachsen gegeneinander versetzt angeordnet, wobei die Kette so breit ausgelegt ist, dass beide Zahnräder eingreifen können.

Bei dem aus der DE 200 02 397 U1 bekannten Getriebe wird der Achsversatz über eine Treibstange überbrückt, die jeweils mit auf den Drehachsen angeordneten Zahnrädern kämmt, wobei die Zahnräder in Richtung der Drehachsen gegeneinander versetzt angeordnet sind und die Zahnstange zum Ausgleich eine L-förmige Gestalt aufweist.

Auf Dreh-/Kippbeschläge können bei über den Handgriff eingebrachten Drehmomenten beträchtliche Kräfte wirken, mit denen das Getriebe, das zwischen dem Handgriff und dem Treibstangenantrieb angeordnet ist, beaufschlagt wird. Bei solchen Drehmomenten können Zahnräder des Getriebes leicht beschädigt werden, zumal der zur Verfügung stehende Bauraum aufgrund der geometrischen Abmessungen der Stulpleiste begrenzt ist und damit bestimmte Dimensionierungen der Zahnpaarungen nicht überschritten werden können. Ebenso besteht die Gefahr, dass je nach eingestelltem Winkel des Vierkantstiftes gegenüber den Drehachsen bei einer einem Kardan-Antrieb ähnlichen Lösung die Kontaktflächen des schräg in die Vierkantausnehmungen eingreifenden Vierkantstiftes beschädigt werden. Das Problem wird um so größer, je größer der zu überbrückende Achsversatz ist.

Neben der Übertragung von großen Drehmomenten besteht an ein oben beschriebenes Getriebe die Anforderung, gewisse maximale Abmessungen nicht zu überschreiten beziehungsweise generell möglichst geringe Außenabmessungen aufzuweisen. Dabei spielt neben der Breite des Getriebegehäuses, das durch die Breite der Stulpleiste begrenzt ist, die Tiefe des Gehäuses, die durch die Tiefe der Stulpleiste begrenzt ist, eine wichtige Rolle. Der zu überbrükkende Achsabstand ist dabei teilweise ebenfalls aufgrund der eingesetzten Standard-Treibstangenbeschläge und der Abmessungen der Stulpleiste fest vorgegeben, wobei dabei nicht die größeren Achsabstände konstruktiv Probleme bereiten, sondern eher geringe Achsabstände. Denn je geringer die zu überbrückenden Achsabstände, desto näher liegen zwangsläufig die Drehachsen der Übertragungsmittel zusammen, und je kleiner können damit die einsetzbaren Zahnräder oder andere Eingriffspaarungen ausgeführt werden, was wiederum die Stabilität negativ beeinflußt.

Der Erfindung liegt die Aufgabe zugrunde, ein Getriebe der eingangs genannten Art derart weiterzubilden, dass insbesondere ein vergleichsweise geringer Versatz der Drehachsen der Übertragungsmittel überbrückt werden kann, wobei das Getriebe bei kompakten Außenabmessungen hoch belastbar und mit geringem Aufwand und wenigen verschiedenen Einzelteilen herstellbar sein soll.

Zur Lösung dieser Aufgabe ist vorgesehen, dass das Getriebe gemäß der Merkmale des Oberbegriffs des Anspruchs 1 derart ausgestaltet ist, dass die ersten und zweiten Übertragungsmittel auf der vom anderen Übertragungsmittel abgewandten Seite jeweils einen Anschlagnocken aufweisen, und dass ein die beiden Übertragungsmittel umschlingender Führungskanal vorgesehen ist, in welchem die Anschlagnokken jeweils um etwa 180° schwenkbar sind, wobei zwischen den Anschlagnocken beidseitig je gleichlange, dem Führungskanal folgende, quer zur Längsachse auslenkbare und in Längsrichtung drucksteife Verbindungselemente zur Übertragung der Drehbewegungen vom ersten zum zweiten Übertragungsmittel abgestützt sind.

Durch den die beiden Übertragungsmittel umschlingenden Führungskanal, der in Form eines langgestreckten O um die beiden im wesentlichen kreisrunden Übertragungsmittel herum verläuft, ist eine eindeutige Führung der Verbindungselemente quer zur Längsrichtung des Führungskanals gewährleistet. In Längsrichtung des Führungskanals sind die Verbindungselemente beweglich und durch das Anliegen an den in Teilbereichen des Führungskanals schwenkbaren Anschlagnocken positioniert. Die Anschlagnocken sind dabei auf der vom jeweils anderen Übertragungsmittel abgewandten Seite der Übertragungsmittel angeordnet, und zwar derart, dass die an ihnen anliegenden, im Führungskanal längsbeweglichen gleichlangen Verbindungselemente eine Kraftübertragung von einem Anschlagnocken auf den jeweils anderen Anschlagnocken bewirken, sobald eines der Übertragungsmittel gedreht wird. Dabei werden die Kräfte als Druckkräfte über die drucksteif ausgebildeten Verbindungselemente übertragen, wobei je nach Drehrichtung immer nur ein Verbindungselement kraftübertragend wirkt, wohingegen das jeweils andere lediglich im Wesentlichen kraftübertragungslos verschoben wird.

Durch die drucksteife Ausgestaltung der Verbindungselemente und die Abstützung an den Anschlagnocken wird erreicht, dass die Belastungen, die auf die Verbindungselemente wirken, im wesentlichen aus Druckkräften bestehen. Auch das Gehäuse, in dem die Verbindungselemente bereichsweise geführt sind, wird durch diese Ausgestaltung durch die Verbindungselemente im wesentlichen druckbeaufschlagt. Durch diese auf die Übertragung von größtenteils Druckkräften ausgelegte Kinematik können durch das Getriebe vergleichsweise große Drehmomente übertragen werden. Da die Werkstoffkennwerte bei bestimmten Werkstoffen bei solchen Druckbeaufschlagungen häufig besser sind als bei Zug- oder sonstigen Beanspruchungen, kann das Getriebe dieser Bauart mit besonders kleinen Außenabmessungen ausgeführt sein.

Das Getriebe ist ausgelegt für eine Drehbewegung der beiden Übertragungsmittel von jeweils maximal 180°, wodurch bei entsprechender Dimensionierung und Übertragung der Drehbewegung auf ein Kantengetriebe eines Treibstangenantriebes genau die erforderlichen Hube eines Dreh-KippBeschlages erreicht werden. Daher sind kontinuierliche Drehbewegungen nicht angedacht, sondern lediglich Bewegungen innerhalb dieses Bereichs. Dieser Drehbereich spiegelt sich im Aufbau des Getriebes dadurch wider, dass der Bewegungsbereich der Anschlagnocken auf der vom anderen Übertragungsmittel abgewandten Seite liegt. Aufgrund der Umschlingung der Übertragungsmittel mit dem Führungskanal liegt dieser im Bereich der vom anderen Übertragungsmittel abgewandten Seite jeweils eng an den Übertragungsmitteln an, und zwar mit einem Umschlingungswinkel von wenigstens jeweils 180°. Durch dieses über einen großen Winkelbereich vorliegende Anliegen liegen die Verbindungselemente über den gesamten Drehbereich des Anschlagnockens an den Übertragungsmitteln an. Daher kann erreicht werden, dass pro Übertragungsmittel jeweils lediglich ein einziger Anschlagnocken genügt, um die erforderliche Funktion zu gewährleisten. Auch ist der Kontakt zwischen den Anschlagnocken und den Verbindungselementen immer gleich gegeben, ein Ein- und Ausschwenken der Nokken oder Zahnrädern in Aussparungen eines Rings oder eines Gegenzahnrades ist nicht erforderlich.

Durch den 180°-Drehbereich der Anschlagnocken auf der vom anderen Übertragungsmittel abgewandten Seite besteht vor allem gegenüber einer Zahnrad-Ausführung der Vorteil, dass die Anschlagnocken nicht in den Bereich zwischen den beiden Übertragungsmitteln eindrehen. Daher müssen für die Anschlagnocken nicht entsprechende Freiräume vorgesehen werden, sondern die beiden Übertragungsmittel können näher aneinander angeordnet werden. Dieses kommt der Forderung, möglichst geringe Achsversatze ausgleichen zu können, besonders nach. Durch das Erfordernis jeweils nur eines Anschlagnockens vereinfacht sich zum einen die Herstellung der Übertragungsmittel, zum anderen können die Außenabmessungen des Getriebes durch das enge Anliegen des Führungskanals, insbesondere auch im Bereich zwischen den beiden Übertragungsmitteln, besonders kompakt ausgeführt sein.

In Weiterbildung der Erfindung ist gemäß Anspruch 2 vorgesehen, dass die Anschlagnocken bezüglich der Übertragungsmittel radial ausgerichtet sind und jeweils wenigstens eine radial verlaufende Abstützfläche zur tangentialen Beaufschlagung der Verbindungselemente aufweisen. Durch diese Ausgestaltung der Abstützflächen ist der Einwirkwinkel und auch die Kontaktstelle, mit dem die Verbindungselemente auf die Abstützfläche einwirken, in allen Betriebszuständen des Getriebes gleich, so dass zum einen die Hebelverhältnisse bezüglich des radialen Abstandes zu den Drehachsen gleichbleibend sind und zum anderen keine wesentliche Relativbewegung zwischen den Anschlagnocken und den Verbindungselementen besteht, was Verschleißerscheinungen vermindert.

In weiterer Ausgestaltung der Erfindung ist gemäß Anspruch 3 und 4 vorgesehen, dass das erste und das zweite Verbindungselement durch im Führungskanal angeordnete, gegeneinander abgestützte Wälzkörper gebildet ist, wobei die Wälzkörper als Kugeln ausgebildet sind. Die Ausgestaltung der Verbindungselemente in Form von Wälzköpern hat den Vorteil, dass diese besonders druckstabil und zugleich flexibel sind, da die Wälzköper, in einer Reihe aufgereiht und in einem Führungskanal liegend, quer zur Längsachse dieser Reihe auslenkbar sind und somit der Kontur des Führungskanals folgen können. Die Ausbildung der Wälzkörper als Kugeln hat den Vorteil, dass die Kontaktflächen und damit die zu erwartenden Reibungsverluste innerhalb des Getriebes gering sind. Außerdem besteht bei der Montage des Getriebes der Vorteil, dass sich die Kugeln relativ einfach automatisiert handhaben lassen, da sie, durch eine entsprechende Zuführeinrichtung zugeführt, einfach in die Führungskanäle einrollen und sich in diesem selbständig gleichmäßig verteilen.

In Weiterbildung der Erfindung ist gemäß Anspruch 5 vorgesehen, dass die Übertragungsmittel in gegeneinander versetzten Ebenen angeordnet sind und der die beiden Übertragungsmittel umschlingende Führungskanal diesem Ebenenversatz angepaßt ist, indem er in Längsrichtung der Drehachsen eine Abstufung aufweist. Dadurch kann das Getriebe auf die Platzverhältnisse und die unsymmetrische Einbausituation innerhalb einer Stulpleiste besser angepaßt werden. Die Abstufung besitzt dabei die Form ähnlich einer Kröpfung.

In Weiterbildung der Erfindung ist gemäß Anspruch 6 alternativ vorgesehen, dass die Wälzkörper eine tonnen- oder nadelförmigen Gestalt aufweisen, wobei ihre Längsachsen parallel zur ersten und zweiten Drehachse ausgerichtet sind. Eine solche Ausgestaltung ist insbesondere bei großen zu übertragenden Kräften zu wählen, da die Kraftübertragungsflächen zwischen den einzelnen Wälzkörpern aufgrund der Linienlasten gegenüber Punktlasten bei Kugeln erhöht ist.

In weiterer Ausgestaltung der Erfindung ist gemäß Anspruch 7 und 8 alternativ vorgesehen, dass das erste und das zweite Verbindungselement jeweils durch einen Federstahlabschnitt gebildet ist, wobei der Federstahlabschnitt als eine Einheit von wenigstens zwei parallel gestapelten Federstahlelementen ausgebildet ist, die an ihren Enden verbunden sind. Solche Federstahlabschnitte sind ebenfalls in der Lage, sich der Kontur des Führungskanals durch Biegung in eine Richtung anzupassen, und sie sind bei entsprechender Führung ebenfalls druckstabil. Darüber hinaus haben sie den Vorteil, dass sie gegenüber Wälzkörpern eine geringe Bauhöhe aufweisen, was zur Folge hat, dass die Außenabmessungen des Getriebes dadurch nochmals vermindert werden können. Zur Aufnahme von besonders großen Druckkräften können mehrere Federstahlelemente zu einem Stapel zusammenfaßt werden, um die Druckfestigkeit entsprechend zu erhöhen.

In weiterer Ausgestaltung der Erfindung ist gemäß Anspruch 9 vorgesehen, dass die Anschlagnocken im Bereich der Abstützflächen im Aufnahmenockengrund jeweils eine Haltenut zum Halten der Federstahlabschnitte aufweisen, und dass das Gehäuse jeweils eine entlang des Führungskanals verlaufende Führungsnut zur Führung der Federstahlabschnitte aufweist. Dadurch erfolgt eine Führung der Federstahlabschnitte innerhalb der Führungsnuten, so dass die Führungsnut zum Teil den Führungskanal bildet. Die druckfeste Verbindung des Federstahlabschnittes mit dem Anschlagnocken erfolgt durch das Einrasten des Federstahlabschnittes in die Haltenut des Anschlagnockens.

In Weiterbildung der Erfindung ist gemäß Anspruch 10 und 11 vorgesehen, dass die Verbindungselemente in Führungskanälen geführt sind, die durch die Wandung eines Gehäuses, durch die ersten und zweiten Übertragungsmittel sowie von Stützelementen gebildet sind, wobei die Stützelemente eine etwa dreieckförmige Gestalt aufweisen und mit dem Gehäuse einstückig verbunden sind. Die Stützelemente füllen dabei den zwickelartigen Bereich zwischen dem die Übertragungsmittel umschlingend ausgeführten Führungskanal und den Übertragungsmitteln aus. Dabei übernehmen sie eine Doppelfunktion, indem sie einerseits ein Teil der Wandung des Führungskanals bilden und andererseits einen Teil der Lagerungsfunktion für die Übertragungsmittel übernehmen.

In weiterer Ausgestaltung der Erfindung ist gemäß Anspruch 12 vorgesehen, dass das Gehäuse einseitig offen und durch einen Deckel verschließbar ausgeführt ist. Dadurch können während der Montage die Komponenten in das Gehäuse eingebracht werden und sind unmittelbar fest positioniert, schon bevor der Deckel aufgebracht wird. Außerdem sind die Führungsbahnen der Wälzkörper an der nach außen gerichteten Seite des Führungskanals einstückig und nicht durch eine Naht zwischen zwei Gehäusehälften unterbrochen, wodurch eine gleichmäßigere Laufbahn für die Wälzkörper vorliegt.

In Weiterbildung der Erfindung ist gemäß Anspruch 13 alternativ vorgesehen, dass das Gehäuse aus zwei gleichgestalteten Gehäusehälften gebildet ist. Dadurch wird der Vorteil erreicht, dass zwei baugleiche Gehäusehälften die Bauteilevielfalt für das gesamte Bauteil vermindern und damit sowohl die Fertigung der Einzelkomponenten als auch die Montage des gesamten Getriebes vereinfachen.

In weiterer Ausgestaltung der Erfindung ist gemäß Anspruch 14 vorgesehen, dass das Gehäuse eine im wesentlichen quaderförmige Gestalt aufweist. Dadurch kann das Gehäuse auf einfache Art und Weise in die als Hohlprofil ausgeführte Stulpleiste eingesetzt werden und wird während der Einführbewegung durch die geradlinigen Außenflächen parallel innerhalb der Stulpleiste geführt, wodurch auch die genaue Positionierung verbessert wird.

In Weiterbildung der Erfindung ist gemäß Anspruch 16 vorgesehen, dass zur Begrenzung der Drehbeweglichkeit der Übertragungsmittel wenigstens zwei Endanschläge vorgesehen sind, die mit dem Gehäuse verbunden sind und an wenigstens einem der Anschlagnocken anschlagbar sind. Dadurch ist auf Seiten des Getriebes eine eindeutige Begrenzung auf einen Auslenkungsbereich von etwa 180° gegeben.

In Weiterbildung der Erfindung ist gemäß Anspruch 17 vorgesehen, dass das Getriebe im wesentlichen innerhalb eines Hohlraumes einer Stulpleiste an einem der Fensterflügel angeordnet ist. Durch eine derartige Anordnung wird ein Ausfräsen der beiden Fensterflügel zur Herstellung eines Einbauraumes für das Getriebe vermieden, es ist lediglich eine einzige Ausfräsung in der Stulpleiste zur Aufnahme des Getriebes erforderlich. Durch den Wegfall des Ausfräsens der Fensterflügel werden diese nicht unnötig in ihrer Stabilität eingeschränkt, so dass das Fenster insgesamt stabiler ist.

In weiterer Ausgestaltung der Erfindung ist gemäß Anspruch 18 und 19 vorgesehen, dass sie ein Getriebe nach einem der vorhergehenden Ansprüche, einen treibstangenseitigen Mehrkantdorn sowie einen einer Griffolive zugeordneten griffseitigen Mehrkantdorn aufweist, wobei der in die erste Mehrkantaufnahme einsetzbare treibstangenseitige Mehrkantdorn mit einem Treibstangenantrieb koppelbar ist und der in die zweite Mehrkantaufnahme einsetzbare griffseitige Mehrkantdorn mit einer Griffolive koppelbar ist, wobei der Treibstangenantrieb Teil eines Dreh-/Kippbeschlages für wenigstens einen der Fensterflügel ist. Dadurch läßt sich auf einfache Art und Weise ein Achsversatz zwischen der Mehrkantaufnahme des Treibstangenantriebs und dem Mehrkantdorn der Griffolive ausgleichen.

Anhand der folgenden Ausführungsbeispiele wird die Erfindung näher erläutert. Dabei zeigt:
- Fig. 1: eine räumliche Ansicht des erfindungsgemäßen Getriebes mit Kugeln als Verbindungselemente, wobei lediglich eine Gehäusehälfte dargestellt ist;
- Fig. 2: eine Draufsicht auf das Getriebe gemäß Fig. 1;
- Fig. 3: eine Schnittdarstellung des Getriebes Gemäß Fig. 2 entlang der Linie A-A;
- Fig. 4: eine Schnittdarstellung des Getriebes nach Fig. 3 mit einem Ebenenversatz;
- Fig. 5: eine räumliche Ansicht des Getriebes gemäß Fig. 4;
- Fig. 6a: eine Schnittdarstellung der Einbausituation des Getriebes innerhalb einer Stulpleiste eines Fensterflügels.
- Fig. 6b: eine Schnittdarstellung entsprechend Fig. 6a, wobei das Getriebe einen Ebenenversatz aufweist;
- Fig. 7: eine Draufsicht auf ein Getriebe mit Federstahlabschnitten als Verbindungselemente;
- Fig. 8: eine Schnittdarstellung des Getriebes nach Fig. 7 entlang der Linie A-A;

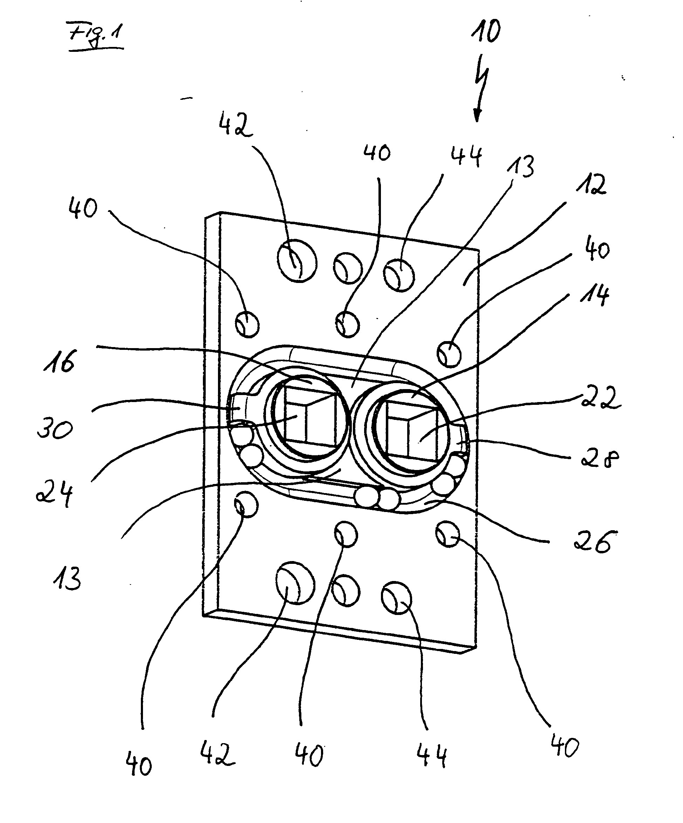

Fig. 1 zeigt eine räumliche Ansicht eines Getriebes 10 für den Einsatz bei zweiflügeligen Fenstern oder Türen ohne Mittelpfosten. Es dient zum Ausgleich des Achsversatzes zwischen der Drehachse einer Griffolive und der Drehachse eines Kantengetriebes eines Treibstangenantriebes.

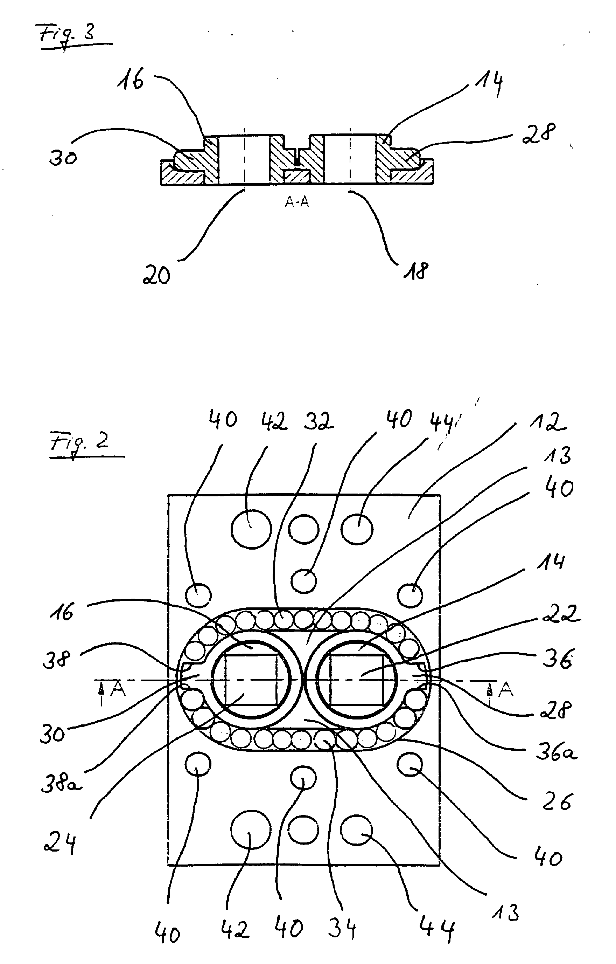

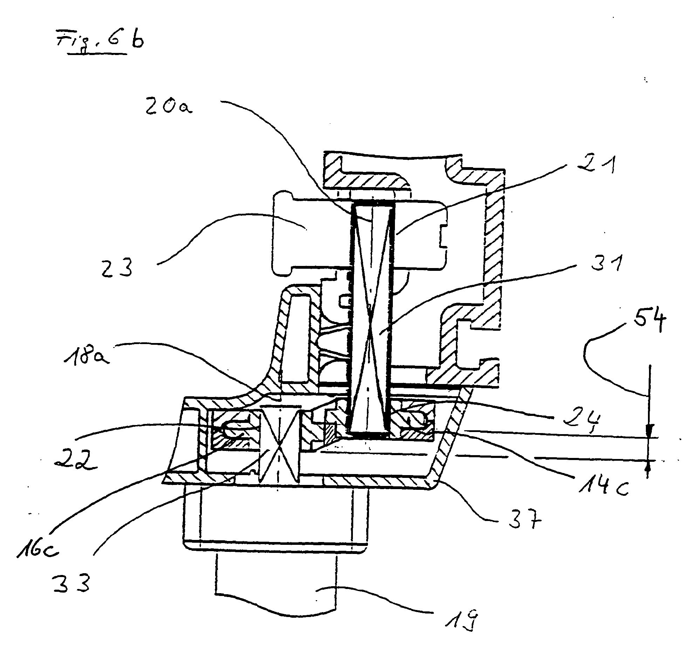

Das Getriebe 10 besteht aus einem Gehäuse, das aus zwei gleichgestalteten Gehäusehälften 12 gebildet ist, von denen in Fig. 1 zur Erhöhung der Anschaulichkeit des inneren Aufbaus lediglich eine Hälfte dargestellt ist. In dem Gehäuse sind ein erstes Übertragungsmittel 14 und ein zweites Übertragungsmittel 16 um die in Fig. 3 dargestellten Drehachsen 18 und 20 drehbar gelagert. Die Drehachsen 18 und 20 verlaufen dabei parallel zueinander, wobei sie in Fig. 3 seitlich gegeneinander versetzt angeordnet sind. Eine der Drehachsen stimmt dabei gemäß Fig. 6a mit der Drehachse 18a der Griffolive 19 überein, während die andere Drehachse mit der Drehachse 20a einer Mehrkantaufnahme 21 des Kantengetriebes 23 übereinstimmt.

Die Übertragungsmittel 14 und 16 weisen eine im wesentlichen kreisrunde Umfangsform auf, wobei sie in ihrem Innern jeweils eine Mehrkantaufnahme 22 und 24 in Form eines Vierkants besitzen. Sie sind senkrecht zu den Drehachsen 18 und 20 auf einer gemeinsamen Ebene angeordnet. Um die Übertragungsmittel 14 und 16 herum ist ein Führungskanal 26 ausgebildet, der die beiden Übertragungsmittel 14 und 16 derart umschlingt, dass die Längsachse in Form der Mittellinie des Führungskanals parallel zu einer gedachten Linie eines die Übertragungsmittel umschlingenden Bandes gelegen ist.

Die Übertragungsmittel 14 und 16 sind jeweils mit einem Anschlagnocken 28 und 30 versehen, der jeweils radial bezüglich der Drehachsen 18 und 20 ausgerichtet ist. Durch eine Schwenkbewegung der Übertragungsmittel 14 und 16 werden die Anschlagnocken 28 und 30 innerhalb des Führungskanals 26 geschwenkt. Die Anschlagnocken 28 und 30 sind dabei in Fig. 1 in einer Grundstellung dargestellt, von der aus eine maximale Schwenkbewegung um jeweils 90° in jede Richtung vorgesehen ist, so dass insgesamt ein Schwenkbereich von 180° für jeden Anschlagnocken 28 und 30 vorliegt. Die Anschlagnocken sind dabei in der Grundstellung jeweils auf der vom anderen Übertragungselement abgewandten Seite angeordnet.

Gemäß Fig. 2 sind zwischen den Anschlagnocken 28 und 30 jeweils Verbindungselemente 32 und 34 in Form von jeweils mehreren Kugeln in dem Führungskanal 26 gelagert, die in Fig. 1 nur teilweise dargestellt sind. Die Anschlagnocken 28 und 30 liegen jeweils an Abstützflächen 36, 36a, 38 und 38a auf, an denen die Kugeln der Verbindungselemente 32 und 34 anliegen.

Sobald nun über eine der Drehachsen 18 oder 20 eine Drehbewegung eingeleitet wird, wird damit eines der Übertragungsmittel 14, 16 gedreht, womit auch einer der Anschlagnocken 28, 30 geschwenkt wird. Dadurch werden die Kugeln, die in Schwenkrichtung liegen, druckbeaufschlagt und drücken auf den jeweils anderen Anschlagnocken, wodurch das jeweils andere Übertragungsmittel zur Drehung veranlaßt wird. Die Kugeln des jeweils anderen Verbindungselements werden ohne wesentliche Kraftübertragung entsprechend innerhalb des Führungskanals mitgeführt. Die Drehbewegung der Übertragungsmittel um die Drehachsen 18 und 20 kann dabei von der in Fig. 2 dargestellten Grundstellung jeweils etwa 90° in beide Richtungen betragen. Die entsprechende Rückstellbewegung wird über die jeweils anderen Verbindungselemente, die lediglich im Führungskanal mitgeführt werden, in einer entsprechend umgekehrten Bewegungsreihenfolge getätigt.

Zur Fixierung der beiden Gehäusehälften 12 gegeneinander sind Bohrungen 40 vorgesehen, über die eine entsprechende Verschraubung erfolgt. Zur Verschraubung des Getriebes mit einer im Fensterflügel angeordneten Getriebeschiene werden weitere Bohrungen 42 verwandt, wohingegen die Bohrungen 44, die mit einem Gewinde ausgestattet sein können, zur Fixierung der Griffeinheit am Getriebe dienen.

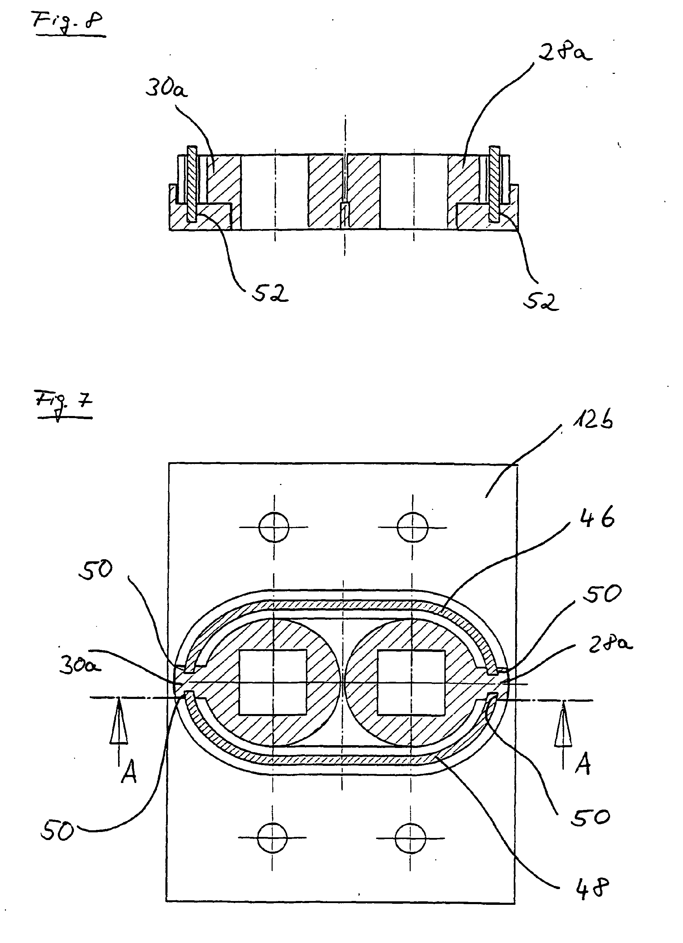

Fig. 7 zeigt eine Draufsicht auf eine alternative Ausgestaltung des oben beschriebenen Getriebes. In diesem Fall sind die Verbindungselemente als Federstahlabschnitte 46 und 48 ausgeführt. Diese übertragen die Druckkräfte zwischen den Anschlagnocken 28a und 30a nach dem gleichen Prinzip wie im oben ausgeführten Beispiel. Durch die im Querschnitt pilzkopfartige Ausgestaltung der Anschlagnokken 28a, 30a sind die Federstahlabschnitte 46, 48 in die dadurch gebildeten Aufnahmenuten 50 eingespannt. Zur Fixierung der Federstahlabschnitte 46, 48 ist des weiteren eine Führungsnut 52 in den jeweiligen Gehäusehälften 12b vorgesehen, in denen die Federstahlabschnitte längsverschieblich geführt sind.

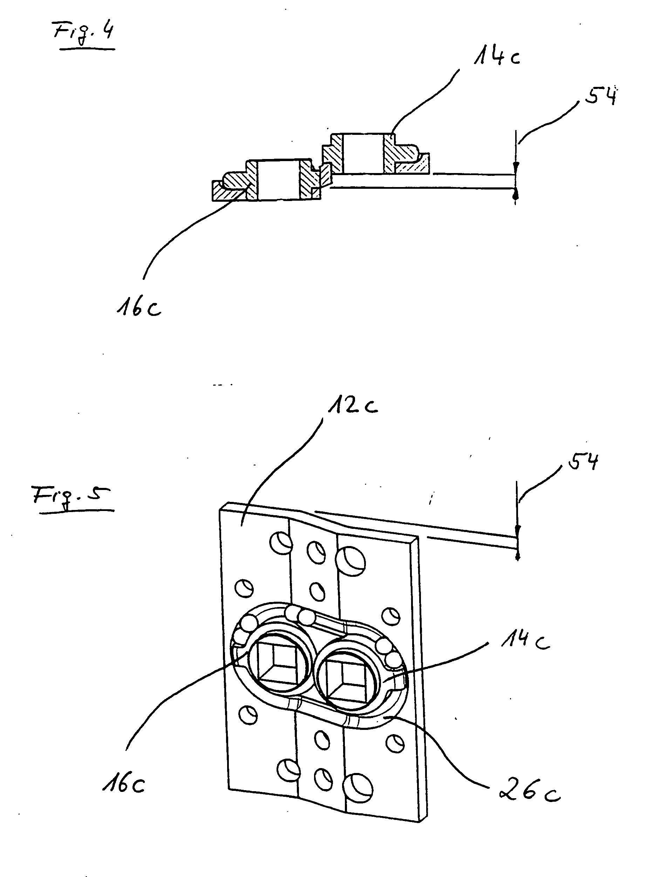

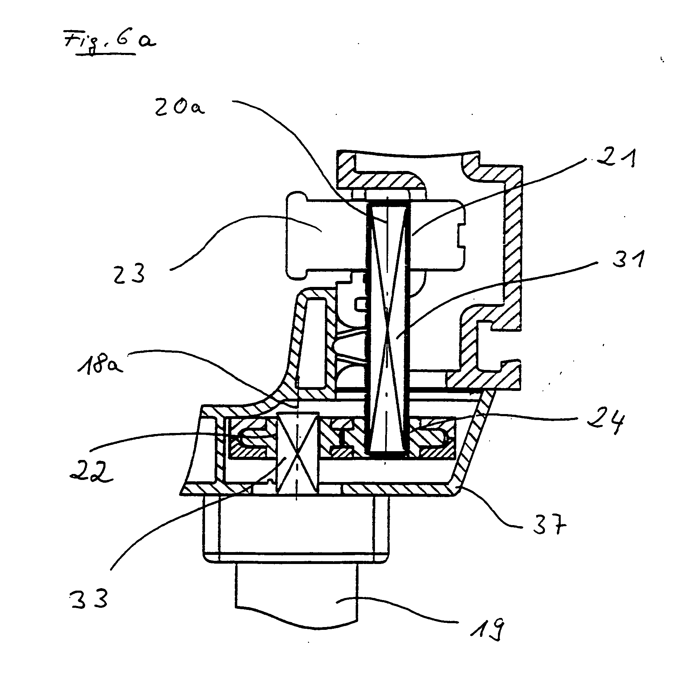

Eine weitere alternative Ausgestaltung ist in den Fig. 4, 5 und 6b dargestellt. Das Getriebe arbeitet wiederum nach dem gleichen Grundprinzip wie die oben beschriebenen Getriebe, wobei die Übertragungsmittel 14c und 16c durch einen Ebenenversatz 54 gegeneinander abgestuft sind. Der Führungskanal 26c ist diesem Versatz entsprechend angepaßt, wobei er mit möglichst geringen Radien gemäß Fig. 5 einer einer Abkröpfung ähnlichen Kontur folgt. Das Gehäuse 12c weist dabei ebenfalls eine der Kontur des Führungskanals 26c im wesentlichen folgende Kontur auf. Dadurch wird erreicht, dass das Getriebe, wenn es in einer Stulpleiste positioniert ist, den zur Verfügung stehenden Bauraum im Bereich der in Fig. 4 nach unten breiter werdenden Geometrie besser ausgenutzt werden kann.

## Patentansprüche

1. Getriebe für Fenster und/oder Türen zur Übertragung einer Drehbewegung von einem um eine erste Drehachse (18) drehbaren ersten Übertragungsmittel (14) auf ein um eine zweite Drehachse (20) drehbaren zweiten Übertragungsmittel (16), wobei die erste Drehachse (18) gegenüber der zweiten Drehachse (20) parallel versetzt ist, und wobei die ersten und zweiten Übertragungsmittel (14, 16) miteinander über ein Verbindungselement gleichsinnig drehbar antriebsverbunden sind, **dadurch gekennzeichnet, dass** die ersten und zweiten Übertragungsmittel (14, 16) auf der vom anderen Übertragungsmittel abgewandten Seite jeweils einen Anschlagnocken (28, 30) aufweisen, und dass ein die beiden Übertragungsmittel (14, 16) umschlingender Führungskanal (26) vorgesehen ist, in welchem die Anschlagnocken (28, 30) jeweils um etwa 180° schwenkbar sind, wobei zwischen den Anschlagnocken (28, 30) beidseitig je gleichlange, dem Führungskanal (26) folgende, quer zur Längsachse auslenkbare und in Längsrichtung drucksteife Verbindungselemente (32, 34) zur Übertragung der Drehbewegungen vom ersten zum zweiten Übertragungsmittel (14, 16) abgestützt sind.

2. Getriebe nach Anspruch 1, **dadurch gekennzeichnet, dass** die Anschlagnocken (28, 30) bezüglich der Übertragungsmittel (14, 16) radial ausgerichtet sind und jeweils wenigstens eine radial verlaufende Abstützfläche (36, 36a, 38, 38a) zur tangentialen Beaufschlagung der Verbindungselemente (32, 34) aufweisen.

3. Getriebe nach Anspruch 1 oder 2, **dadurch gekennzeichnet, dass** das erste und das zweite Verbindungselement (32, 34) durch im Führungskanal (26) angeordnete, gegeneinander abgestützte Wälzkörper gebildet ist.

4. Getriebe nach Anspruch 1, 2 oder 3, **dadurch gekennzeichnet, dass** die Wälzkörper als Kugeln ausgebildet sind.

5. Getriebe nach Anspruch 4, **dadurch gekennzeichnet, dass** die Übertragungsmittel (14, 16) in gegeneinander versetzten Ebenen angeordnet sind und der die beiden Übertragungsmittel (14, 16) umschlingende Führungskanal (26) diesem Ebenenversatz angepaßt ist, indem er in Längsrichtung der Drehachsen eine Abstufung aufweist.

6. Getriebe nach Anspruch 1, 2 oder 3, **dadurch gekennzeichnet, dass** die Wälzkörper eine tonnen- oder nadelförmigen Gestalt aufweisen, wobei ihre Längsachsen parallel zur ersten und zweiten Drehachse ausgerichtet sind.

7. Getriebe nach Anspruch 1 oder 2, **dadurch gekennzeichnet, dass** das erste und das zweite Verbindungselement (32, 34) jeweils durch einen Federstahlabschnitt (46, 48) gebildet ist.

8. Getriebe nach Anspruch 7, **dadurch gekennzeichnet, dass** der Federstahlabschnitt (46, 48) als eine Einheit von wenigstens zwei parallel gestapelten Federstahlelementen ausgebildet ist, die an ihren Enden verbunden sind.

9. Getriebe nach Anspruch 7 oder 8, **dadurch gekennzeichnet, dass** die Anschlagnocken (28, 30) im Bereich der Abstützflächen im Aufnahmenockengrund jeweils eine Haltenut (50) zum Halten der Federstahlabschnitte (46, 48) aufweisen, und dass das Gehäuse jeweils eine entlang des Führungskanals (26) verlaufende Führungsnut (52) zur Führung der Federstahlabschnitte aufweist.

10. Getriebe nach einem der vorhergehenden Ansprüche, **dadurch gekennzeichnet, dass** die Verbindungselemente in Führungskanälen (26) geführt sind, die durch die Wandung eines Gehäuses (12), durch die ersten und zweiten Übertragungsmittel (14, 16) sowie von Stützelementen (13) gebildet sind.

11. Getriebe nach Anspruch 10, **dadurch gekennzeichnet, dass** die Stützelemente (13) eine etwa dreieckförmige Gestalt aufweisen und mit dem Gehäuse (12) einstückig verbunden sind.

12. Getriebe nach einem der vorhergehenden Ansprüche, **dadurch gekennzeichnet, dass** das Gehäuse einseitig offen und durch einen Deckel verschließbar ausgeführt ist.

13. Getriebe nach einem der vorhergehenden Ansprüche, **dadurch gekennzeichnet, dass** das Gehäuse aus zwei gleichgestalteten Gehäusehälften (12) gebildet ist.

14. Getriebe nach einem der vorhergehenden Ansprüche, **dadurch gekennzeichnet, dass** das Gehäuse eine im wesentliche quaderförmige Gestalt aufweist.

15. Getriebe nach einem der vorhergehenden Ansprüche, **dadurch gekennzeichnet, dass** das erste und das zweite Übertragungsmittel (14, 16) jeweils eine Mehrkantaufnahme (22, 24) zur formschlüssigen Aufnahme eines treibstangenseitigen beziehungsweise eines griffseitigen Mehrkantdorns (31, 33) aufweisen.

16. Getriebe nach einem der vorhergehenden Ansprüche, **dadurch gekennzeichnet, dass** zur Begrenzung der Drehbeweglichkeit der Übertragungsmittel (14, 16) wenigstens zwei Endanschläge vorgesehen sind, die mit dem Gehäuse verbunden sind und an wenigstens einem der Anschlagnocken anschlagbar sind.

17. Getriebe nach einem der vorhergehenden Ansprüche, **dadurch gekennzeichnet, dass** es im wesentlichen innerhalb eines Hohlraumes einer Stulpleiste (37) an einem der Fensterflügel angeordnet ist.

18. Verschlussantriebseinheit für ein zweiflügeliges Fenster ohne Mittelpfosten, **dadurch gekennzeichnet, dass** sie ein Getriebe nach einem der vorhergehenden Ansprüche, einen treibstangenseitigen Mehrkantdorn (31) sowie einen einer Griffolive (19) zugeordneten griffseitigen Mehrkantdorn (33) aufweist.

19. Verschlussantriebseinheit nach Anspruch 18, **dadurch gekennzeichnet, dass** der in die erste Mehrkantaufnahme einsetzbare treibstangenseitige Mehrkantdorn (31) mit einem Treibstangenantrieb koppelbar ist und der in die zweite Mehrkantaufnahme einsetzbare griffseitige Mehrkantdorn (33) mit einer Griffolive koppelbar ist, wobei der Treibstangenantrieb Teil eines Dreh-/Kippbeschlages für wenigstens einen der Fensterflügel ist.

## Claims

1. Transmission element for windows and/or doors to transfer a rotational movement from a first transfer means (14) capable of rotation about a first axis of rotation (18) onto a second transfer means (16) capable of rotation about a second axis of rotation (20), wherein the first axis of rotation (18) is offset parallel opposite the second axis of rotation (20), and wherein the first and second transfer means (14, 16) are connected to one another by a connection element such as to be driven in rotation in the same direction, **characterised in that** the first and second transfer means (14, 16) exhibit contact cams (28, 30) on each side turned away from the other transfer means, and **in that** a guide channel (26) is provided which surrounds the two transfer means (14, 16), in which the contact cams (28, 30) can in each case be pivoted by about 180°, wherein on both sides connection elements (32, 34) are supported, of equal length, following the guide channel (26), deflectable transverse to the longitudinal axis, and rigid in compression in the longitudinal direction, for transferring the rotational movements from the first to the second transfer means (14, 16).

2. Transmission element according to Claim 1, **characterised in that** the contact cams (28, 30) are aligned radially in relation to the transfer means (14, 16), and in each case exhibit at least one support surface (36, 36a, 38, 38a) running radially for the tangential contact of the connection elements (32, 34).

3. Transmission element according to Claim 1 or 2, **characterised in that** the first and the second connection elements (32, 34) are formed by mutually-supporting rolling bodies arranged in the guide channel (26).

4. Transmission element according to Claim 1, 2, or 3, **characterised in that** the rolling bodies are designed as balls.

5. Transmission element according to Claim 4, **characterised in that** the transfer means (14, 16) are arranged in mutually offset planes and the guide channel (26) surrounding the two transfer means (14, 16) is adjusted to this plane offset, **in that** it exhibits a stepping arrangement in the longitudinal direction of the axes of rotation.

6. Transmission element according to Claim 1, 2, or 3, **characterised in that** the rolling bodies exhibit a barrel-shaped or needle-shaped design, wherein their longitudinal axes are aligned parallel to the first and second axes of rotation.

7. Transmission element according to Claim 1 or 2, **characterised in that** the first and second connection elements (32, 34) are formed in each case by a spring steel section (46, 48).

8. Transmission element according to Claim 7, **characterised in that** the spring steel section (46, 48) is formed as one unit from at least two spring steel elements stacked in parallel, which are connected at their ends.

9. Transmission element according to Claim 7 or 8, **characterised in that** the contact cams (28, 30) in each case exhibit in the area of the support surfaces in the cam mounting base a retaining slot (50) for holding the spring steel sections (46, 48), and **in that** the housing in each case exhibits a guide slot (52) running along the guide channel (26) in order to guide the spring steel sections.

10. Transmission element according to one of the preceding claims, **characterised in that** the connection elements are guided in guide channels (26), which are formed by the wall of a housing (12), by the first and second transfer means (14, 16), and by support elements (13).

11. Transmission element according to Claim 10, **characterised in that** the support elements (13) exhibit an approximately triangular shape and are connected as one piece with the housing (12).

12. Transmission element according to one of the preceding claims, **characterised in that** the housing is designed as open on one side and can be closed by a cover.

13. Transmission element according to one of the preceding claims, **characterised in that** the housing is formed from two housing halves (12) of the same design.

14. Transmission element according to one of the preceding claims, **characterised in that** the housing has an essentially square-shaped form.

15. Transmission element according to one of the preceding claims, **characterised in that** the first and the second transfer means (14, 16) in each case exhibit a multi-edged mounting (22, 24) for the positive-fit mounting of a multi-edged bolt (31, 33) on the drive rod side or the handle side respectively.

16. Transmission element according to one of the preceding claims, **characterised in that**, in order to limit the rotational movement of the transfer means (14, 16), at least two end stops are provided, which are connected to the housing and can come into contact with at least one of the contact cams.

17. Transmission element according to one of the preceding claims, **characterised in that** it is arranged essentially inside a cavity of a facing strip (37) on one of the window casements.

18. Closure drive unit for a two-casement window without a centre post, **characterised in that** it contains a transmission element according to one of the preceding claims, a multi-edged bolt (31) on the drive rod side, and a multi-edged bolt (33) on the handle side, allocated to an olive-shaped handle (19).

19. Closure drive unit according to Claim 18, **characterised in that** the multi-edged bolt (31) on the drive rod side, which can be introduced into the first multi-edged mounting, can be coupled to a drive rod drive, and the multi-edged bolt (33) on the handle side, which can be introduced into the second multi-edged mounting, can be coupled to an olive-shaped handle, wherein the drive rod drive is a part of a rotating/tilting fitting for at least one of the window casements.

## Revendications

1. Engrenage pour fenêtres et/ou portes, destiné à transmettre un mouvement de rotation depuis un premier moyen de transmission (14), rotatif autour d'un premier axe de rotation (18), vers un deuxième moyen de transmission (16), rotatif autour d'un deuxième axe de rotation (20), le premier axe de rotation (18) étant décalé parallèlement au deuxième axe de rotation (20) et le premier et le deuxième moyen de transmission (14, 16) étant liés en entraînement l'un à l'autre par un élément de liaison de manière à pouvoir tourner dans le même sens, **caractérisé en ce que** le premier et le deuxième moyen de transmission (14, 16) comportent chacun un ergot de butée (28, 30) sur le côté opposé à l'autre moyen de transmission, et **en ce qu'**autour des deux moyens de transmission (14, 16) il est prévu un canal de guidage (26), dans lequel les ergots de butée (28, 30) peuvent pivoter chacun sur environ 180°, des éléments de liaison (32, 34) de même longueur, destinés à transmettre les mouvements de rotation du premier moyen de transmission (14) sur le deuxième moyen de transmission (16), étant amenés en appui entre les ergots de butée (28, 30) en suivant de part et d'autre le canal de guidage (26), lesquels éléments sont aptes à être déviés perpendiculairement à l'axe longitudinal et sont résistants à la pression dans le sens longitudinal.

2. Engrenage selon la revendication 1, **caractérisé en ce que** les ergots de butée (28, 30) sont orientés dans le sens radial par rapport aux moyens de transmission (14, 16) et comportent chacun au moins une surface d'appui (36, 36a, 38, 38a), orientée dans le sens radial et destinée à solliciter tangentiellement les éléments de liaison (32, 34).

3. Engrenage selon la revendication 1 ou 2, **caractérisé en ce que** le premier et le deuxième élément de liaison (32, 34) sont formés par des corps de roulement en appui les uns contre les autres dans le canal de guidage (26).

4. Engrenage selon la revendication 1, 2 ou 3, **caractérisé en ce que** les corps de roulement sont réalisés sous forme de billes.

5. Engrenage selon la revendication 4, **caractérisé en ce que** les moyens de transmission (14, 16) sont agencés dans des plans décalés l'un par rapport à l'autre et le canal de guidage (26), entourant les deux moyens de transmission (14, 16), est adapté à ce décalage des plans, dans la mesure où il comporte un décrochement dans le sens longitudinal des axes de rotation.

6. Engrenage selon la revendication 1, 2 ou 3, **caractérisé en ce que** les corps de roulement ont une morphologie en forme de fût ou d'aiguille, leurs axes longitudinaux étant orientés parallèlement au premier et au deuxième axe de rotation.

7. Engrenage selon la revendication 1 ou 2, **caractérisé en ce que** le premier et le deuxième élément de liaison (32, 34) sont formés chacun par un bout d'acier à ressort (46, 48).

8. Engrenage selon la revendication 7, **caractérisé en ce que** le bout d'acier à ressort (46, 48) est réalisé sous la forme d'une unité d'au moins deux éléments en acier à ressort empilés parallèlement et reliés entre eux par leurs extrémités.

9. Engrenage selon la revendication 7 ou 8, **caractérisé en ce que** les ergots de butée (28, 30) comportent chacun, dans la zone des surfaces d'appui dans le fond de réception, une rainure de fixation (50) destinée à maintenir les bouts d'acier à ressort (46, 48) et **en ce que** le coffre comporte une rainure de guidage (52), qui est destinée à guider les bouts d'acier à ressort et qui s'étend respectivement le long du canal de guidage (26).

10. Engrenage selon l'une quelconque des revendications précédentes, **caractérisé en ce que** les éléments de liaison sont logés dans les canaux de guidage (26), qui sont formés par une paroi d'un coffre (12), par le premier et le deuxième moyen de transmission (14, 16), ainsi que par des éléments d'appui (13).

11. Engrenage selon la revendication 10, **caractérisé en ce que** les éléments d'appui (13) sont réalisés avec une forme triangulaire et sont reliés d'un seul tenant au coffre (12).

12. Engrenage selon l'une quelconque des revendications précédentes, **caractérisé en ce que** le coffre est ouvert sur un côté et est réalisé de manière à pouvoir être fermé par un couvercle.

13. Engrenage selon l'une quelconque des revendications précédentes, **caractérisé en ce que** le coffre est formé par deux moitiés de coffre (12) de même configuration.

14. Engrenage selon l'une quelconque des revendications précédentes, **caractérisé en ce que** le coffre a une forme sensiblement parallélépipédique.

15. Engrenage selon l'une quelconque des revendications précédentes, **caractérisé en ce que** le premier et le deuxième moyen de transmission (14, 16) comportent chacun un logement polygonal (22, 24) destiné à recevoir par conjugaison de forme une tige polygonale (31, 33) du côté de la crémone ou du côté du bouton de manoeuvre.

16. Engrenage selon l'une quelconque des revendications précédentes, **caractérisé en ce que** pour limiter le mouvement de rotation des moyens de transmission (14, 16), il est prévu au moins deux butées de fin de course, qui sont assemblées au coffre et qui peuvent venir en butée contre au moins l'un des ergots de butée.

17. Engrenage selon l'une quelconque des revendications précédentes, **caractérisé en ce qu'**il est agencé pour l'essentiel à l'intérieur d'une cavité d'une têtière (37) sur un des vantaux de fenêtre.

18. Unité de commande de verrouillage pour une fenêtre à deux vantaux sans meneau central, **caractérisée en ce qu'**elle comporte un engrenage selon l'une quelconque des revendications précédentes, une tige polygonale (31) du côté de la crémone, ainsi qu'une tige polygonale (33) du côté du bouton de manoeuvre, associée à un bouton ovale (19).

19. Unité de commande de verrouillage selon la revendication 18, **caractérisée en ce que** la tige polygonale (31) du côté de la crémone, destinée à être introduite dans le premier logement polygonal, peut être couplée à une commande de crémone et **en ce que** la deuxième tige polygonale (33) du côté du bouton de manoeuvre, destinée à être introduite dans le deuxième logement polygonal, peut être couplée à un bouton ovale, la commande de crémone faisant partie d'une ferrure de pivotement ou basculement pour au moins un des vantaux de fenêtre.
